**Europäisches Patentamt**

(19) **European Patent Office**

**Office européen des brevets**

(11) Publication number: **0 090 084**
**B1**

(12) **EUROPEAN PATENT SPECIFICATION**

(45) Date of publication of patent specification: **05.11.86**

(51) Int. Cl.⁴: **F 16 D 23/06**

(21) Application number: **82110960.0**

(22) Date of filing: **26.11.82**

(54) **Improved manual transmission synchronizer.**

(30) Priority: **25.03.82 JP 48024/82**

(43) Date of publication of application:
**05.10.83 Bulletin 83/40**

(45) Publication of the grant of the patent:
**05.11.86 Bulletin 86/45**

(84) Designated Contracting States:
**DE FR GB**

(56) References cited:
**DE-A-1 555 158**
**FR-A- 844 534**
**FR-A-1 181 512**
**JP-A-56 156 528**
**US-A-4 238 012**

**"Auto-mechanics" second edition, H.
ELLINGER, pages 337-339, 22-2. Transmission
design**

(73) Proprietor: **NISSAN MOTOR CO., LTD.**
**No.2, Takara-cho, Kanagawa-ku**
**Yokohama-shi Kanagawa-ken 221 (JP)**

(72) Inventor: **Hiraiwa, Kazuyoshi**
**No. 81-9, Onna**
**Atsugi City (JP)**
Inventor: **Kawaguchi, Akio**
**No. E-204 Nissan-Ninohara-Kazoku-Apt. No.
2960**
**Asamidozai Sagamihara Kanagawa Pref. (JP)**

(74) Representative: **Patentanwälte Grünecker, Dr.
Kinkeldey, Dr. Stockmair, Dr. Schumann, Jakob,
Dr. Bezold, Meister, Hilgers, Dr. Meyer-Plath
Maximilianstrasse 58
D-8000 München 22 (DE)**

Courier Press, Leamington Spa, England.

## Description

The present invention relates generally to a manual transmission synchronizer and more specifically to a "Warner" type synchronizer in which improved insert springs are used.

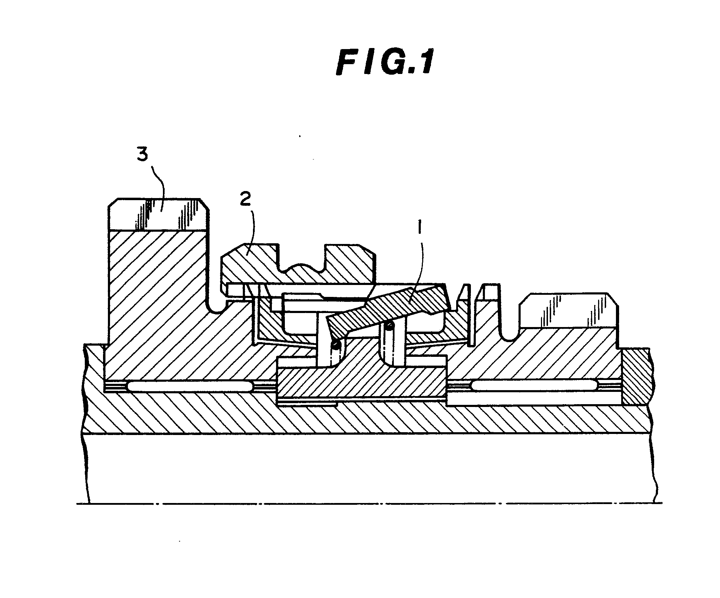

In a previously proposed "Warner" type synchronizer arrangement inserts have been used to apply pressure to the baulk ring as the coupling sleeve moves toward a given gear so as to engage a "cone-clutch" like arrangement and induce the gear and coupling sleeve to rotate at approximately the same rotational speed and thus facilitates smooth entry of the splines on the coupling sleeve between the teeth formed on the gear. However, with this arrangement one or more of the inserts 1 are, as shown in Fig. 1, apt to slip out of their normal position and interfere with the return movement of the coupling sleeve 2 away from one of the two gear 3 with which it is selectively engageable.

A full and detailed description of the above disclosed arrangement may be found in "Auto-Mechanics" (second edition) by Herbert Ellinger pages 337—339, which is hereby incorporated by reference.

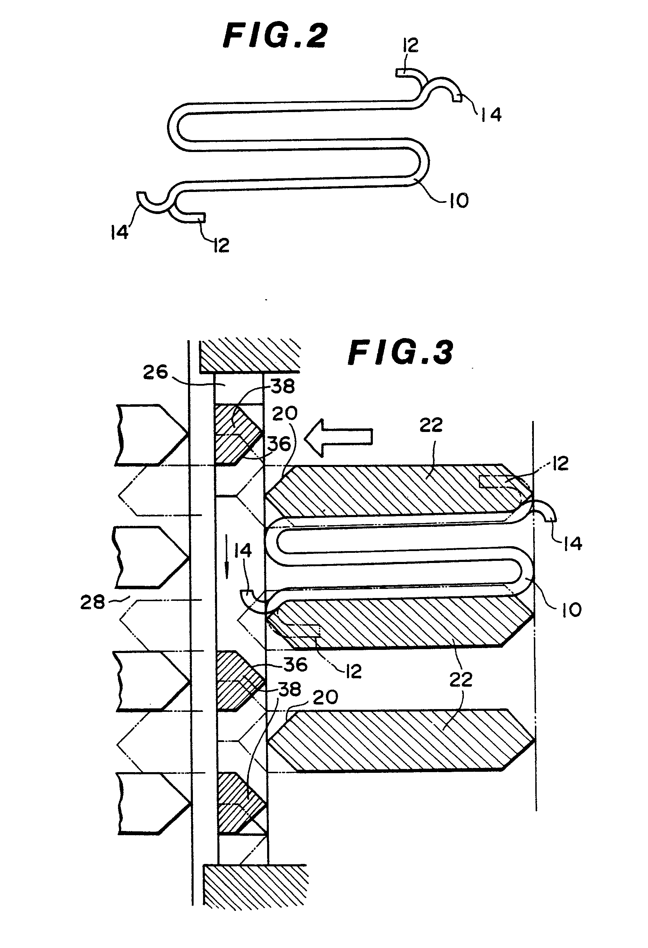

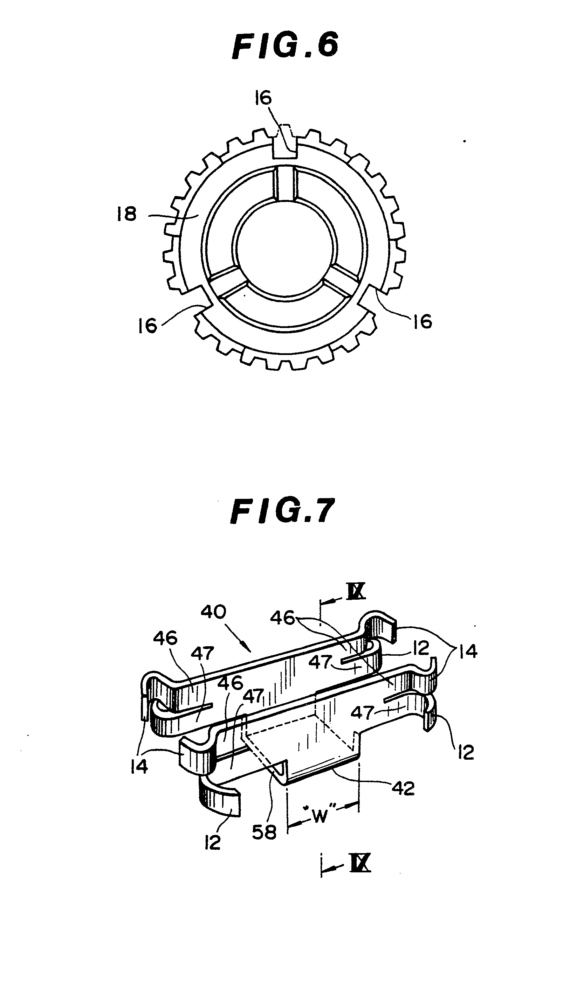

To overcome this problem it has been subsequently proposed in JP—A—56-156528 to replace the insert and spread ring arrangements with a plurality of single spring members such as 10 shown in Figs. 2 to 4. As shown, in the just mentioned arrangement, each spring 10 is formed to have an essentially "S" shaped cross-section and further formed with an outwardly and an inwardly curving flange portion 12, 14 at each end thereof. Three of these springs are disposed in respective notches or recesses formed in the synchro-hub (see 16 in Fig. 6 for example) and arranged so that the inwardly curving flange portions 14 engage chamfers 20 formed on the ends of the coupling sleeve splines 22 when the coupling sleeve assumes its home or neutral position, and so that the outwardly curving flange portions 12 which are formed radially inward of the inwardly curving ones (14), engage the outer peripheral surface of the baulk rings 26, 27.

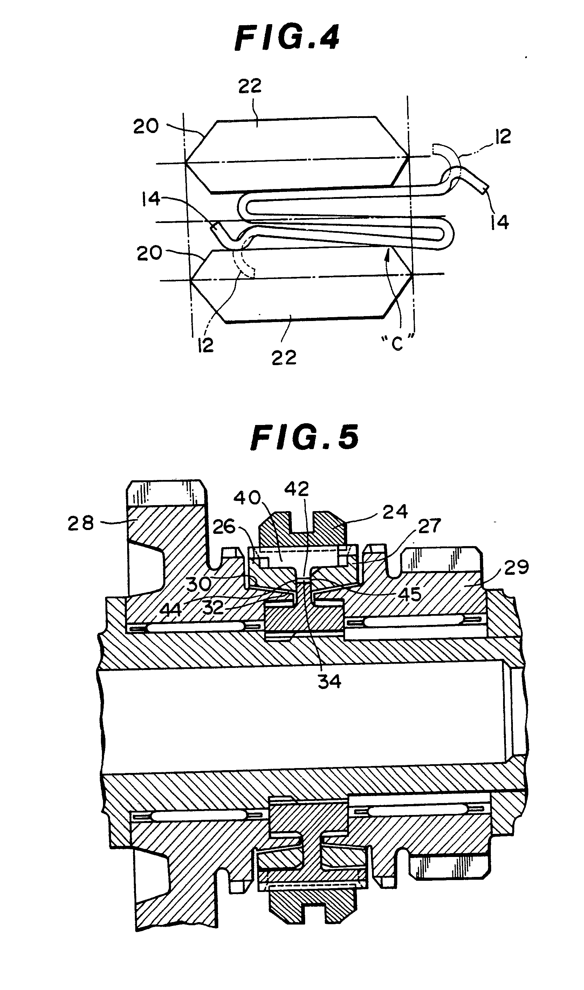

With this arrangement as the coupling sleeve 24 is moved toward a gear (for example 28) the inwardly curving flange portions 14 grip the chamfers 20 formed on the coupling sleeve splines 22 and cause each of the springs to move sufficiently toward the same gear (28) to bias the baulk ring 26 in the same direction. This bias induces a first stage of synchronization wherein the frusto-conical surfaces 30, 32 of the gear and the baulk ring engage to the degree of inducing an initial stage of synchronization. Further movement of the coupling sleeve 24 toward the gear induces the situation wherein coupling sleeve splines 22 deflect the inwardly curving flange portions 14, inwardly as they move therepast to assume a position such as shown in Fig. 4. It should be noted at this time that the axial movement of the spring 10 is limited by the provision of a tang-like member (not shown) formed at the bottom of the central portion of the spring which is received in a recess 34 defined between the inboard surfaces 44, 45 of the baulk rings 26, 27 and the notches 16 in the synchro-hub 18 (see Fig. 5 by way of example). Following the deflection of the inwardly curving portions 14, the chamfers 20 of the coupling sleeve splines 22 and those formed on the baulk ring teeth 38 engage (as shown in phantom in Fig. 3) after the baulk ring 26 has rotated through a distance which corresponds approximately to half a pitch of the coupling sleeve splining. This engagement applies sufficient force to the frusto-conical surfaces 30, 32 to complete the synchronization whereafter the coupling sleeve 24 pushes the baulk ring 26 aside and moves into engagement with the teeth formed on the gear 28.

However, this arrangement has suffered from the drawback that as shown in Fig. 4, a line contact is generated at the position indicated by "C" and the return of the coupling sleeve 24 toward its home position hindered inducing a "Jamming" phenomenon.

It is an object of the present invention therefore, to eliminate the above mentioned drawbacks via the use of an improved insert spring which obviates the "jamming" inherent in the prior art arrangements.

The present invention takes the form of a manual transmission synchronizer having a synchro-hub, a baulk ring, a coupling sleeve, means defining an aperture in the synchro-hub, and a single piece spring which is disposed in the aperture, which is formed with sections engageable with the baulk ring and the coupling sleeve, the sections being arranged to bias the baulk ring into engagement with the gear as the coupling sleeve is moved toward the baulk ring, and which is characterized in that the spring has an essentially "U" shape (as seen in elevation) and is formed with symmetrical extensions at the ends of which the sections are formed in mirror image pairs and which engage chamfers formed on adjacent splines.

The features and advantages of the arrangement of the present invention will become more clearly appreciated from the following description taken in conjunction with the accompanying drawings in which:

Fig. 1 is a sectional elevation of the prior art arrangement discussed briefly in the opening paragraphs of this disclosure;

Fig. 2 is a plan view of a prior art spring used to replace the insert and spread ring arrangement of Fig. 1;

Fig. 3 is a sectional view showing the spring of Fig. 2 disposed in an operational position within a synchronizer;

Fig. 4 is a view showing the spring shown in Fig. 2, in a distorted configuration which occurs during engagement of the coupling sleeve with a gear and which shows the "jamming" effect which is inherently produced thereby;

Fig. 5 is a sectional view of a gear and synchronizer arrangement in which a first embodiment of the present invention is employed;

Fig. 6 is an elevational view of the synchro-hub shown in Fig. 5;

Fig. 7 is an isometric view of the spring used in the arrangement shown in Fig. 5;

Fig. 8 is a sectional view showing the spring of Fig. 7, disposed within an operational position within the synchronizer; and

Figs. 9 and 10 are plan and elevations of a spring constituting a second embodiment of the present invention wherein Fig. 9 is a sectional view taken along section line IX—IX of Fig. 7.

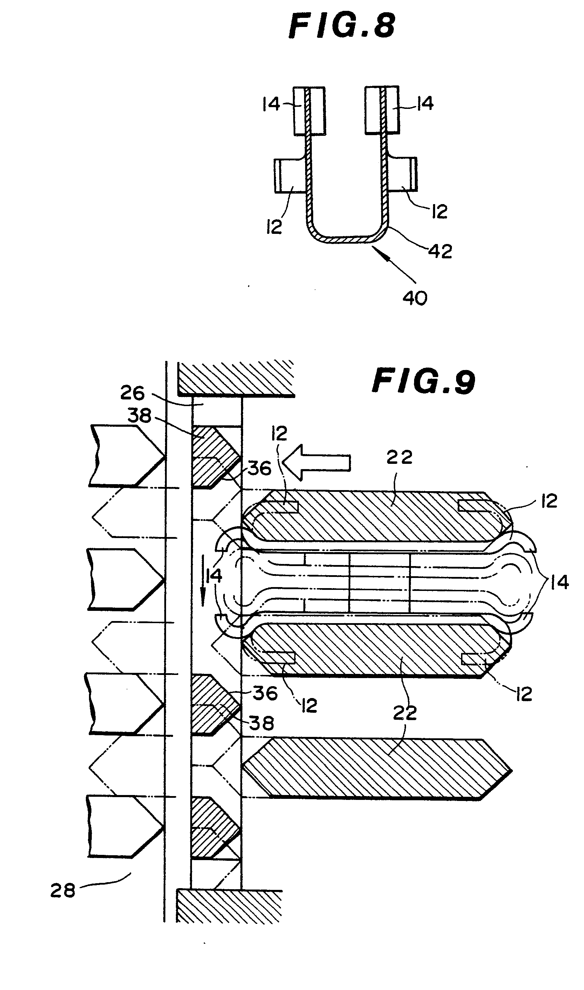

In the first embodiment of the present invention (shown in Figs. 5 to 9) a 40 spring is formed of sheet spring steel in a manner to have, as best seen in Figs. 7 and 9, an essentially "U" shaped cross-section (taken laterally across the main body portion thereof) and pairs of "mirror image" inwardly and outwardly curving flange portions 12, 14 at each end thereof, so that upon the coupling sleeve 24 deflecting one pair of the inwardly curving flange portions 14, the spring 40 is compressed laterally inward and assumes a configuration as shown in Fig. 8, wherein the surface contact between the spring 40 and the sides of the coupling sleeve splines 22 is minimized. This feature is deemed highly advantageous in that the resistance to sliding of the coupling sleeve toward and away from the gear is minimized while simultaneously eliminating the "Jamming" problem encountered with the prior art arrangement.

In this embodiment the axial length "W" of the tang-like portion 42 is arranged to be essentially equal to the distance defined between the inboard surfaces 44, 45 of the baulk rings 26, 27 which cooperate to define the afore-mentioned recess 34. As will be readily appreciated from Fig. 7, the tang-like portion 42 of this embodiment is essentially as wide as the main body portion of the spring, and thus able to stably exert force on the inboard surfaces 44, 45 of the baulk rings (viz., a force which acts normally to said surfaces). Further, as best seen in Fig. 7, in this embodiment the inwardly and outwardly curving flange portions are formed in "mirror image" pairs at the ends of symmetrically arranged finger-like extensions 46, 47 which, via flexure thereof permit the curving flange portions 14 to move independently of the portions 12 and enable the bias which the coupling sleeve 24 must be moved against prior to slipping therepast, to be adjusted via selecting the dimensions of the extensions 47.

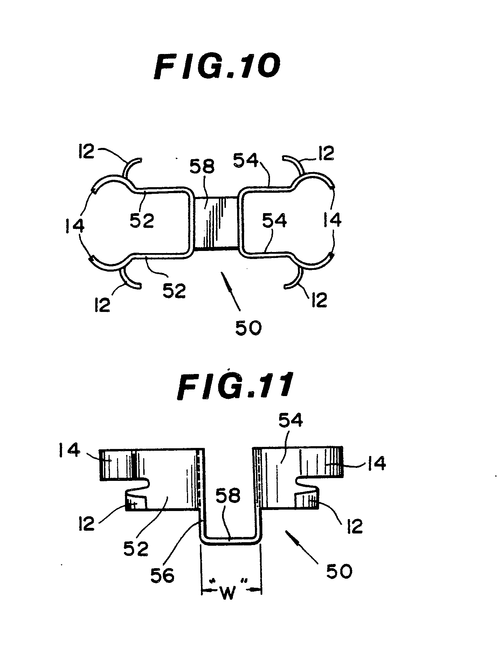

Figs. 10 and 11, show a second embodiment of the present invention wherein a spring 50 is formed in a manner that as the coupling sleeve slides toward gear 28 and the inwardly curving flange portions 14 are deflected inwardly between the splines 22 of the coupling sleeve 24 only the arm-like extensions 52 on which the inwardly and outwardly curving flange portions are formed, are deflected inwardly while the extensions 54 on which the flange portions are formed remain undeflected and in contact with the sides of the coupling sleeve splines 22. This embodiment thus provides a suitable degree of resistance to the sliding of the coupling sleeve to hold same in a "rattle free" condition while simultaneously eliminating any "jamming" which might hinder the return of the sleeve toward its home position.

As shown in Fig. 11, the tang-like portion of this embodiment is arranged so that the bridge portion 58 extends parallel with the axis of rotation of the synchro-hub 18 as different from that of the second embodiment wherein the corresponding portion extends traversely with respect to the same axis. The length of the bridge portion 58 is selected to be "W" which is approximately the same as the distance between the aforementioned inboard surfaces 44, 45. The tang-like portion of this embodiment also applies force normally to the inboard surfaces 44, 45.

With the two embodiments disclosed hereinbefore, it will be appreciated that as there are pairs of inwardly curving flange portions formed at the ends of the springs, as the coupling sleeve 24 moves toward a baulk ring, the springs will be drawn uniformly therewith (during the initial of the synchronization) further ensuring that force is normally applied to the baulk rings until the coupling sleeve "slips" thereover deflecting the symmetrically arranged portions of the spring on which the flange portions are formed, laterally inwards to obviate any "jamming".

**Claims**

1. In a manual transmission synchronizer having a synchro-hub, a baulk ring (26; 27) and a coupling sleeve (24), means defining an aperture (16) in said synchro-hub; and a single piece spring (40) which is disposed in said aperture (16), said spring (40) being formed with curving flange portions (12, 14) engageable with said baulk ring (26; 27) and said coupling sleeve (24), said flange portions (12, 14) being arranged to bias the baulk ring (26; 27) into engagement with the gear (28; 29) as said coupling sleeve (24) is moved toward said baulk ring (26; 27) characterized in that said spring (40) has an essentially "U" shape and is formed with symmetrical extensions (46, 47, 52, 54) at the ends of which said flange portions (12, 14) are formed in mirror image pairs and which engage chamfers (20) formed on adjacent splines (22) of the coupling sleeve (24).

2. A manual transmission synchronizer as set forth in claim 1, characterized in that the flange portions (14) which engage said chamfers (20) are formed at the ends of the finger-like extensions (46) which extend from the main body of said spring (40).

3. A manual transmission synchronizer as set forth in claim 2, characterized in that said flange portions (14) are formed on arm-like extensions (52, 54) which extend from the main body of the said spring and in that each pair of arms (52, 54) may be flexed independently of the other.

**Patentansprüche**

1. Von Hand betätigte Synchronisierungseinrichtung mit einer Synchro-Nabe, einem Keilring (26; 27) und einer Kupplungshülse (24), einer eine Öffnung (16) in der Synchro-Nabe begrenzenden Einrichtung und einer einstückigen Feder (40), die in der Öffnung (16) angeordnet ist, wobei die Feder (40) mit gebogenen Flanschteilen (12, 14) ausgebildet ist, die mit dem Keilring (26; 27) und der Kupplungshülse (24) in Eingriff bringbar sind, und die Flanschteile (12, 14) so angeordnet sind, daß sie den Keilring (26; 27) in Eingriff mit dem Zahnrad (28; 29) forspannen, wenn die Kupplungshülse (24) zum Keilring (26; 27) hinbewegt wird, dadurch gekennzeichnet, daß die Feder (40) eine im wesentlichen "U"-Form hat und mit symmetrischen Verlängerungen (46, 47, 52, 54) ausgebildet ist, an deren Enden die Flanschteile (12, 14) in spiegelbildlichen Paaren ausgebildet sind und Abschrägungen (20) beaufschlagen, die an benachbarten Keilnuten (22) der Kupplungshülse (24) ausgebildet sind.

2. Synchronisierungseinrichtungen nach Anspruch 1, dadurch gekennzeichnet, daß die Flanschteile (14), die die Abschrägungen (20) beaufschlagen, an den Enden von fingerähnlichen Verlängerungen (46) ausgebildet sind, die sich von dem Hauptteil der Feder (40) erstrecken.

3. Synchronisierungseinrichtung nach Anspruch 2, dadurch gekennzeichnet, daß die Flanschteile (14) an armähnlichen Verlängerungen (52, 54) ausgebildet sind, die sich von dem Hauptteil der Feder erstrecken, und daß jedes Paar von Armen (52, 54) unabhängig von dem anderen elastisch biegbar ist.

**Revendications**

1. Dans un synchroniseur pour transmission à commande manuelle ayant un moyeu de synchroniseur, une bague de solive (26; 27) et un manchon d'accouplement (24),

un moyen définissant une ouverture (16) dans ledit moyeu de synchroniseur; et

un ressort (40) en une seule pièce qui est disposé dans ladite ouverture (16), ledit ressort (40) ayant des parties d'aile (12, 14) courbées pouvant venir en engagement avec ladite bague de solive (26; 27) et ledit manchon d'accouplement (24), lesdites parties d'aile (12, 14) étant agencées pour solliciter la bague de solive (26; 27) en engagement avec le pignon (28; 29), tandis que le manchon d'accouplement (24) est déplacé vers ladite bague de solive (26; 27) caractérisé en ce que ledit ressort (40) a une forme essentiellement en "U" et présente des extensions symétriques (46, 47, 52, 54) aux extrémités desquelles sont formées lesdites parties d'aile (12, 14) par paires en image miroir qui engagent des chanfreins (20) formés sur des cannelures adjacentes (22) du manchon d'accouplement (24).

2. Synchroniseur pour transmission à commande manuelle selon la revendication 1 caractérisé en ce que les parties d'aile (14) qui engagent lesdits chanfreins (20) sont formées aux extrémités des extensions (46) en forme de doigt qui s'étendent du corps principal dudit ressort (40).

3. Synchroniseur pour transmission à commande manuelle selon la revendication 2 caractérisé en ce que lesdites parties d'aile (14) sont formées sur des extensions (52, 54) en forme de bras qui s'étendent du corps principal dudit ressort et en ce que chaque paire de bras (52, 54) peut être fléchie indépendamment de l'autre.

# FIG.1

0 090 084

# FIG.2

# FIG.3

2

# FIG.4

# FIG.5

# FIG.6

# FIG.7

# FIG.8

14 — 14

12 — 12

42

40

# FIG.9

26
38
36
12
22
12
14
36
12
22
12
28

# FIG.10

# FIG.11